# FASCICULE DE BREVET EUROPEEN

(11) **EP 3 131 960 B1**
(45) Date de publication et mention de la délivrance du brevet: **12.09.2018**
(21) Numéro de dépôt: 15716998.8
(22) Date de dépôt: 17.04.2015
(51) Int. Cl.: C08K 5/00, C08K 5/04, C08K 5/09, C08K 5/092, C08L 95/00, C09J 195/00

(54) **UTILISATION D'UNE COMPOSITION BITUMINEUSE COMME LIANT DE COLLAGE**
VERWENDUNG BITUMINÖSER VERBINDUNGEN ALS BINDEMITTEL IN KLEBSTOFFEN
USE OF A BITUMINOUS COMPOSITION AS BINDER IN ADHESVIES

(30) Priorité: 18.04.2014 FR 1453546
(43) Date de publication de la demande: 22.02.2017
(73) Titulaire: Total Marketing Services, 92800 Puteaux (FR)
(72) Inventeur: MOUAZEN, Mouhamad, F-69008 Lyon (FR); MESNIL, Jean-Pierre, F-92800 Puteaux (FR); VINCENT, Régis, F-69520 Grigny (FR); LAPALU, Laurence, F-69100 Villeurbanne (FR)
(74) Mandataire: Corizzi, Valérie
(86) Numéro de dépôt international: PCT/EP2015/058378
(87) Numéro de publication internationale: WO 2015/158889

(56) Documents cités:
- EP-A1- 1 350 900
- EP-A1- 1 449 901
- WO-A1-95/16089
- WO-A1-2008/142249
- DE-A1- 3 419 070
- FR-A1- 2 992 653
- US-A1- 2012 031 541

## Description

### DOMAINE TECHNIQUE

La présente invention a pour objet l'utilisation d'une composition bitumineuse pour coller des revêtements sur des structures. La présente invention concerne également un procédé de revêtement d'ouvrages de travaux publics, de génie civil ou de bâtiments, en particulier, de sols et/ou murs de bâtiments.

### ETAT DE L'ART

Les bitumes oxydés sont connus pour leurs propriétés d'adhésivité, notamment pour des applications d'ouvrages de travaux publics ou de bâtiments. Ils sont classiquement utilisés comme liant de collage de membranes d'étanchéité ou de matériaux isolants sur les toitures. Les bitumes oxydés peuvent être appliqués ou enduits à froid ou à chaud. L'application à froid se révèle néanmoins peu efficace sur certains supports. Pour l'application ou l'enduction à chaud, les températures d'application préconisées de ces bitumes oxydés sont généralement supérieures à 200°C, voire même supérieures à 250°C pour obtenir une fluidité suffisante et permettre leur application et le collage de structures sur les sols ou murs à recouvrir. L'utilisation à ces températures induit une forte consommation d'énergie et nécessite un temps de chauffage supplémentaire, augmentant la durée du procédé de revêtement mettant en oeuvre l'étape de collage.

Des compositions bitumineuses ont été proposées pour remplacer les bitumes oxydés comme liant de collage, en particulier des compositions non bitumineuses tels que par exemple des liants hydrauliques à base de ciment et superplastifiant (FR2713686) ou des compositions bitumineuses comprenant des élastomères pour une application à chaud ou à froid. Le document FR2691196 propose de préparer une couverture d'isolation en associant une chape souple spécifique avec une colle rigide de type époxy ou polyuréthane mélangé ou non à du bitume. Le document EP1350900 décrit un liant de collage formé d'un mélange de bitume/élastomère thermoplastique de type SBS, SIS ou EVA pour coller un isolant thermique à froid c'est à dire par enduction du mélange à une température comprise entre 5 et 40°C. On trouve également dans le commerce un produit commercialisé par SOPREMA sous le nom de EAC NEO correspondant à un bitume modifié à base de SEBS (polystyrène-b-poly(éthylène-butylène)-b-polystyrène) utilisé pour le collage à chaud d'isolants thermiques ou de feuilles d'étanchéité en toiture.
Ainsi, le premier but de la présente invention est de fournir un liant de collage efficace, c'est-à-dire permettant de coller des revêtements sur des structures, par exemple des sols et des murs, avec une résistance à l'arrachement et au décollage améliorée.
Un autre objet de l'invention est de proposer un liant de collage facile à mettre en oeuvre et permettant d'écourter la durée nécessaire au collage. En particulier, l'objet de la présente invention vise un liant de collage pour application (enduction) à chaud permettant d'abaisser la température d'application des liants de collage bitumineux tout en étant suffisamment maniables à cette température. En particulier, l'objet de l'invention est de proposer un liant de collage bitumineux ayant une température de mise en oeuvre et/ou d'application inférieure à 190°C, de préférence inférieure à 180°C, plus préférentiellement inférieure ou égale à 160°C.
Un autre objectif de l'invention est de fournir un liant de collage bitumineux capable de résister à ses conditions de transport et de stockage.

### OBJET DE L'INVENTION

L'objet de l'invention concerne l'utilisation d'une composition bitumineuse pour coller des revêtements sur des structures, la compositions comprenant au moins un additif acide de formule générale (**I**) :

R-(COOH)z (**I**)

dans laquelle R est une chaîne hydrocarbonée linéaire ou ramifiée, saturée ou insaturée comprenant de 4 à 68 atomes de carbone, de préférence de 4 à 54 atomes de carbone, plus préférentiellement de 4 à 36 atomes de carbone et z un entier variant de 1 à 4, de préférence de 2 à 4.

Selon un mode de réalisation préférentiel, l'additif acide est un diacide de formule générale HOOC-C_{w}H_{2w}-COOH dans laquelle w est un entier variant de 4 à 22, de préférence de 4 à 12 et où z = 2 et R = C_{w}H_{2w}.

Selon un mode de réalisation préférentiel, l'additif acide est un diacide choisi parmi le groupement constitué par l'acide adipique, l'acide pimélique, l'acide subérique, l'acide azélaique, l'acide sébacique, l'acide undécanedioïque, l'acide 1,2-dodécanedioïque et l'acide tétradécanedioïque.

Selon un mode de réalisation préférentiel, la composition bitumineuse comprend de 0,1% à 5% en masse, de préférence de 0,5 à 4% en masse, plus préférentiellement de 0,5 à 2,5% en masse dudit additif acide par rapport à la masse totale de ladite composition.

Selon un mode réalisation préférentiel, la composition bitumineuse comprend au moins un adjuvant polymère oléfinique fonctionnalisé par au moins des groupements fonctionnels glycidyle.

Selon un mode de réalisation préférentiel, l'adjuvant polymère oléfinique est choisi dans le groupe consistant en :
(a) les copolymères, statistiques ou séquencés, d'éthylène et d'un monomère choisi parmi l'acrylate de glycidyle et le méthacrylate de glycidyle, comprenant de 50% à 99,7% en masse d'éthylène;
(b) les terpolymères, statistiques ou séquencés, d'éthylène, d'un monomère A choisi parmi l'acétate de vinyle et les acrylates ou méthacrylates d'alkyle en C₁ à C₆ et d'un monomère B choisi parmi l'acrylate de glycidyle et le méthacrylate de glycidyle, comprenant de 0,5% à 40% en masse de motifs issus du monomère A et, de 0,5% à 15% en masse de motifs issus du monomère B, le reste étant formé de motifs issus de l'éthylène ; et
(c) les copolymères résultant du greffage d'un monomère B choisi parmi l'acrylate de glycidyle et le méthacrylate de glycidyle, sur un substrat consistant en un polymère choisi parmi les polyéthylènes, les polypropylènes, les copolymères statistiques ou séquencés d'éthylène et d'acétate de vinyle et les copolymère statistiques ou séquencés d'éthylène et d'acrylate ou méthacrylate d'alkyle en C₁ à C₆, comprenant de 40% à 99,7% en masse d'éthylène, lesdits copolymères greffés comprenant de 0,5% à 15% en masse de motifs greffés issus du monomère B.

Selon un mode de réalisation préférentiel, l'adjuvant polymère oléfinique est choisi parmi les terpolymères statistiques ou séquencés d'éthylène, d'un monomère A choisi parmi l'acétate de vinyle et les acrylates ou méthacrylates d'alkyle en C₁ à C₆ et d'un monomère B choisi parmi l'acrylate de glycidyle et le méthacrylate de glycidyle, comprenant de 0,5% à 40% en masse de motifs issus du monomère A et, de 0,5% à 15% en masse de motifs issus du monomère B, le reste étant formé de motifs issus de l'éthylène.

Selon un mode de réalisation préférentiel, l'adjuvant polymère oléfinique est choisi parmi les terpolymères statistiques d'éthylène, d'un monomère A choisi parmi les acrylates ou méthacrylates d'alkyle en C₁ à C₆ et d'un monomère B choisi parmi l'acrylate de glycidyle et le méthacrylate de glycidyle, comprenant de 0,5% à 40% en masse de motifs issus du monomère A et, de 0,5% à 15% en masse de motifs issus du monomère B, le reste étant formé de motifs issus de l'éthylène.

Selon un mode de réalisation préférentiel, la composition bitumineuse comprend de 0,05% à 15% en masse, de préférence de 0,1 à 10% en masse, plus préférentiellement de 0,5 à 6% en masse de l'adjuvant polymère oléfinique par rapport à la masse totale de ladite composition.

Selon un mode de réalisation préférentiel, la composition bitumineuse est conditionnée sous forme de pains de bitume ou dans des sacs en matériau thermofusible ou dans des seaux en matériau thermofusible.

Selon un mode de réalisation préférentiel, la composition bitumineuse est utilisée comme liant de collage de revêtements d'ouvrages de travaux publics, de génie civil ou de bâtiments, de préférence, de revêtements sols et/ou murs, plus préférentiellement, de revêtements ou membranes d'étanchéité et/ou d'isolation, de panneaux ignifugés, des panneaux isolants thermiques et/ou phoniques et des plaques isolantes de mousses de verre expansé.

Selon un mode de réalisation préférentiel, la composition bitumineuse est utilisée comme liant de collage à chaud de revêtements d'ouvrages de travaux publics, de génie civil ou de bâtiments. Le liant de collage est mise en oeuvre et appliquée à des températures de mise en oeuvre et d'application de préférence supérieures à 100°C, de préférence supérieures à 130°C. La température de mise en oeuvre et/ou d'application du liant de collage est de préférence inférieure à 190°C, plus préférentiellement inférieure à 180°C, encore plus plus préférentiellement inférieure ou égale à 160°C.

L'objet de l'invention concerne également un liant de collage de revêtements d'ouvrages de travaux publics, de génie civil ou de bâtiments constitué par une composition telle que décrite précédemment.

### DESCRIPTION DETAILLEE

Selon un mode de réalisation particulier, on prépare un liant de collage de revêtements d'ouvrages de travaux publics, de génie civil ou de bâtiments en constituant une composition bitumineuse.
Ladite composition bitumineuse est obtenue en mettant en contact :
- un bitume,
- entre 0,1% et 5% en masse, de préférence entre 0,5 et 4% en masse, plus préférentiellement entre 0,5% et 2,5% en masse d'un additif acide.

Les pourcentages massiques sont calculés par rapport à la masse totale de la composition bitumineuse.

Selon ce mode de réalisation particulier, la composition bitumineuse comprend donc de 95% à 99, 9 % de bitume tel que décrit précédemment.
La composition bitumineuse

On opère à des températures de mise en oeuvre comprises entre 100°C et 200°C, de préférence entre 150°C et 200°C, plus préférentiellement entre 160°C et 200°C, et sous agitation pendant une durée d'au moins 10 minutes, de préférence comprise entre 1 heure et 10 heures, plus préférentiellement entre 2 heures et 6 heures. On entend par température de mise en oeuvre, la température de chauffage du bitume avant mélange ainsi que la température de mélange. La température et la durée du chauffage varient selon la quantité de bitume utilisée et sont définies par la norme NF EN 12594.

Parmi les bitumes utilisables selon l'invention, on peut citer tout d'abord les bitumes d'origine naturelle, ceux contenus dans des gisements de bitume naturel, d'asphalte naturel ou les sables bitumineux et les bitumes provenant du raffinage du pétrole brut. Les bitumes selon l'invention sont avantageusement choisis parmi les bitumes provenant du raffinage du pétrole brut. Le bitume peut être choisi parmi les bases bitume ou mélange de bases bitume provenant du raffinage du pétrole brut, en particulier des bases bitume contenant des asphaltènes. Les bases bitume peuvent être obtenues par des procédés conventionnels de fabrication des bitumes en raffinerie, en particulier par distillation directe et/ou distillation sous vide du pétrole. Ces bitumes peuvent être éventuellement viscoréduits et/ou désasphaltés. Les différents bitumes obtenus par les procédés de raffinage peuvent être combinés entre eux pour obtenir le meilleur compromis technique. Le bitume peut aussi être un bitume de recyclage. Les bitumes peuvent être des bitumes de grade dur ou de grade mou. Les bitumes selon l'invention ont une pénétrabilité, mesurée à 25°C selon la norme EN 1426, comprise entre 5 et 300 1/10 mm, de préférence entre 10 et 100 1/10 mm, plus préférentiellement entre 30 et 100 1/10 mm,

Selon l'invention, l'additif acide répond à la formule générale (**I**) suivante :

R-(COOH)_{z} (**I**)

dans laquelle R est une chaîne hydrocarbonée linéaire ou ramifiée, saturée ou insaturée comprenant de 4 à 68 atomes de carbone, de préférence de 4 à 54 atomes de carbone, plus préférentiellement de 4 à 36 atomes de carbone et z un entier variant de 1 à 4, de préférence de 2 à 4, plus préférentiellement égal à 2.
Les additifs acides répondant à la formule (**I**) peuvent avantageusement être des diacides (z = 2), des triacides (z = 3) ou des tétracides (z = 4). Les additifs acides préférés sont des diacides avec z = 2. De même, le groupement R est, de préférence, une chaîne hydrocarbonée linéaire et saturée de formule C_{w}H_{2w} avec w un entier variant de 4 à 22, de préférence de 4 à 12.

Les additifs acides ont, en particulier, la formule générale HOOC-C_{w}H_{2w}-COOH où w est un entier variant de 4 à 22, de préférence de 4 à 12. Ces additifs acides correspondent à la formule (**I**) précédente dans laquelle z = 2 et R= C_{w}H_{2w}.
Les diacides préférés sont les suivants :
- l'acide adipique ou acide 1,6-hexanedioïque avec w = 4
- l'acide pimélique ou acide 1,7-heptanedioïque avec w = 5
- l'acide subérique ou acide 1,8-octanedioïque avec w = 6
- l'acide azélaique ou acide 1,9-nonanedioïque avec w = 7
- l'acide sébacique ou acide 1,10-decanedioïque avec w = 8
- l'acide undécanedioïque avec w = 9
- l'acide 1,2-dodécanedioïque avec w = 10
- l'acide tétradécanedioïque avec w = 12

Les diacides peuvent aussi être des dimères diacide d'acide(s) gras insaturé(s) c'est-à-dire des dimères formés à partir d'au moins un acide gras insaturé, par exemple à partir d'un seul acide gras insaturé ou à partir de deux acides gras insaturés différents. Les dimères diacide d'acide(s) gras insaturé(s) sont classiquement obtenus par réaction de dimérisation intermoléculaire d'au moins un acide gras insaturé (réaction de Diels Alder par exemple). De préférence, on dimérise un seul type d'acide gras insaturé. Ils dérivent en particulier de la dimérisation d'un acide gras insaturé notamment en C₈ à C₃₄, notamment en C₁₂ à C₂₂, en particulier en C₁₆ à C₂₀, et plus particulièrement en C₁₈. Un dimère d'acide gras préféré est obtenu par dimérisation de l'acide linoléïque, celui-ci pouvant ensuite être partiellement ou totalement hydrogéné. Un autre dimère d'acide gras préféré a pour formule HOOC-(CH₂)₇-CH=CH-(CH₂)₇-COOH. Un autre dimère d'acide gras préféré est obtenu par dimérisation du linoléate de méthyle. De la même façon, on peut trouver des triacides d'acides gras et des tétracides d'acides gras, obtenus respectivement par trimérisation et tétramérisation d'au moins un acide gras.

Selon un mode de réalisation particulier, la composition bitumineuse comprend de 0,1% à 5% en masse, de préférence de 0,5 à 4% en masse, plus préférentiellement de 0,5 à 2,5% en masse de l'additif acide par rapport à la masse totale de ladite composition.

Selon un autre mode de réalisation particulier, on prépare une composition bitumineuse en mettant en contact :
- un bitume,
- entre 0,1% et 5% en masse, de préférence entre 0,5 et 4% en masse, plus préférentiellement entre 0,5% et 2,5% en masse d'un additif acide,
- et entre 0,05% et 15% en masse, de préférence entre 0,1 et 10% en masse, plus préférentiellement entre 0,5% et 6% en masse d'un adjuvant polymère oléfinique.

Selon ce mode de réalisation particulier, la composition bitumineuse comprend donc de 80% à 99, 85 % de bitume tel que décrit précédemment.

Le bitume et l'additif acide sont tels que décrits ci-dessus.

L'adjuvant polymère oléfinique est choisi, de préférence, dans le groupe consistant en (a) les copolymères éthylène/(méth)acrylate de glycidyle ; (b) les terpolymères éthylène/monomère A/monomère B et (c) les copolymères résultant du greffage d'un monomère B sur un substrat polymère.
(a) Les copolymères éthylène/(méth)acrylate de glycidyle sont, avantageusement, choisis parmi les copolymères statistiques ou séquencés, de préférence statistiques, d'éthylène et d'un monomère choisi parmi l'acrylate de glycidyle et le méthacrylate de glycidyle, comprenant de 50% à 99,7% en masse, de préférence de 60% à 95% en masse, plus préférentiellement 60% à 90% en masse d'éthylène.
(b) Les terpolymères sont, avantageusement, choisis parmi les terpolymères statistiques ou séquencés, de préférence statistiques, d'éthylène, d'un monomère A et d'un monomère B.
   Le monomère A est choisi parmi l'acétate de vinyle et les acrylates ou méthacrylates d'alkyle en C₁ à C₆.
   Le monomère B est choisi parmi l'acrylate de glycidyle et le méthacrylate de glycidyle. Les terpolymères éthylène/monomère A/monomère B comprennent de 0,5% à 40% en masse, de préférence de 5 à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène.
(c) Les copolymères résultent du greffage d'un monomère B choisi parmi l'acrylate de glycidyle et le méthacrylate de glycidyle, sur un substrat polymère. Le substrat polymère consiste en un polymère choisi parmi les polyéthylènes, notamment les polyéthylènes basse densité, les polypropylènes, les copolymères statistiques ou séquencés, de préférence statistiques, d'éthylène et d'acétate de vinyle et les copolymère statistiques ou séquencés, de préférence statistiques, d'éthylène et d'acrylate ou méthacrylate d'alkyle en C₁ à C₆, comprenant de 40% à 99,7% en masse, de préférence de 50% à 99% en masse d'éthylène. Lesdits copolymères greffés comprennent de 0,5% à 15% en masse, de préférence de 2,5% à 15% en masse de motifs greffés issus du monomère B.

L'adjuvant polymère oléfinique est, de préférence, choisi parmi les terpolymères (b) éthylène/monomère A/monomère B décrit ci-dessus.

Avantageusement, l'adjuvant polymère oléfinique est choisi parmi les terpolymères statistiques d'éthylène, d'un monomère A choisi parmi les acrylates ou méthacrylates d'alkyle en C₁ à C₆ et d'un monomère B choisi parmi l'acrylate de glycidyle et le méthacrylate de glycidyle, comprenant de 0,5% à 40% en masse, de préférence de 5 à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène.

Selon un mode de réalisation particulier, la composition bitumineuse comprend de 0,05% à 15% en masse, de préférence de 0,1 à 10% en masse, plus préférentiellement de 0,5 à 6% en masse de l'adjuvant polymère oléfinique par rapport à la masse totale de ladite composition.

Les quantités de l'additif acide et, éventuellement, de l'adjuvant polymère oléfinique sont ajustées en fonction de la nature du bitume utilisé. En particulier, la pénétrabilité visée est de préférence comprise entre 20 et 45 1/10mm et la température de ramollissement bille et anneau (TBA) visée est, de préférence, supérieure à 90°C, étant entendu que la pénétrabilité est mesurée à 25°C selon la norme EN 1426 et la TBA selon la norme EN 1427.

Selon un mode de réalisation particulier, la composition bitumineuse telle que décrite ci-dessus est, de préférence, conditionnée sous forme de pains de bitume ou dans des sacs en matériau thermofusible ou dans des seaux en matériau thermofusible. On entend par pains de bitume, des blocs parallélépipédiques, de préférence des pavés, ayant un volume compris entre 10000 et 30000 cm³, de préférence entre 14000 et 20000 cm³ et/ou de masse comprise entre 10 et 30kg, de préférence 14 et 20kg. Avantageusement, la composition bitumineuse telle que décrite ci-dessus est, de préférence, conditionnée sous forme de pains de bitume ou, dans des sacs ou des seaux en matériau thermofusible. Ces pains de bitume sont avantageusement emballés d'un film thermoplastique ou contenus dans un carton dont classiquement la paroi de la face interne est siliconée. La composition bitumineuse conditionnée en pains de bitume emballés d'un film thermoplastique ou, dans des sacs ou des seaux en matériau thermofusible présente l'avantage d'être prête à l'emploi c'est-à-dire qu'elle peut être directement chauffée dans le fondoir sans déballage préalable. Le matériau thermofusible qui fond avec la composition bitumineuse n'affecte pas les propriétés de ladite composition.

La composition bitumineuse telle que décrite ci-dessus peut également contenir d'autres additifs connus ou d'autres élastomères pour bitume connus tels que les copolymères SB (copolymère à blocs du styrène et du butadiène), SBS (copolymère à blocs styrène-butadiène-styrène), SIS (styrène-isoprène-styrène), SBS* (copolymère à blocs styrène-butadiène-styrène en étoile), SBR (styrène-b-butadiène-rubber), EPDM (éthylène propylène diène modifié). Ces élastomères peuvent en outre être réticulés selon tout procédé connu, par exemple avec du soufre. Néanmoins, on préférera utiliser une composition bitumineuse contenant uniquement du bitume et l'additif acide tels que décrits ci-dessus, comme liant de collage.

L'objet de l'invention concerne un procédé de collage de revêtement d'ouvrages de travaux publics, de génie civil ou de bâtiments, en particulier de sols et/ou murs de bâtiments comprenant une étape d'utilisation d'une composition bitumineuse telle que décrite ci-dessus, comme liant de collage. Le procédé de collage selon l'invention peut s'appliquer à tout type de revêtements conventionnels, de préférence les revêtements d'étanchéité d'ouvrages de travaux publics, de génie civil ou de bâtiments. Le procédé de collage peut avantageusement s'appliquer pour coller des revêtements ou membranes d'étanchéité et/ou d'isolation, des panneaux ignifugés, des panneaux isolants thermiques et/ou phoniques et des plaques isolantes de mousses de verre expansé.

Selon un mode de réalisation particulier, un procédé de collage de revêtement d'ouvrages de travaux publics, de génie civil ou de bâtiments comprend le chauffage de la composition bitumineuse selon l'invention décrite ci-dessus, à une température de mise en oeuvre selon tout procédé connu puis l'application d'une couche de ladite composition bitumineuse à une température d'application selon tout procédé connu.

Le procédé de collage est avantageusement un procédé de collage à chaud. En particulier, les températures de mise en oeuvre et d'application sont avantageusement supérieures à 100°C, de préférence supérieures à 130°C.

Avantageusement, les températures de mise en oeuvre et d'application sont inférieures à 190°C, de préférence inférieures à 180°C, plus préférentiellement inférieures ou égales à 160°C,

Par exemple, un procédé de collage de revêtement d'étanchéité d'une toiture en béton d'un bâtiment comprend les étapes successives suivantes :
- Chauffage de la composition bitumineuse selon l'invention décrite ci-dessus, à une température de mise en oeuvre inférieure à 190°C, de préférence inférieure à 180°C, plus préférentiellement inférieure ou égale à 160°C, selon tout procédé connu. Par exemple, des pains de la composition bitumineuse tels que décrits précédemment peuvent être chauffés dans un fondoir jusqu'à la température de mise en oeuvre.
- Application d'une couche de ladite composition bitumineuse, d'épaisseur comprise entre 0,1 et 3 mm, de préférence entre 0,5 et 1,5 mm, sur le béton de la toiture. La composition bitumineuse est appliquée à une température d'application inférieure à 190°C, de préférence inférieure à 180°C, plus préférentiellement inférieure ou égale à 160°C, selon tout procédé connu.
- Application d'une membrane d'étanchéité sur la couche de composition bitumineuse.

Selon un autre mode de réalisation particulier, un procédé de collage de revêtement d'étanchéité et d'isolation de la toiture en béton d'un bâtiment comprend les étapes successives suivantes :
- Chauffage de la composition bitumineuse selon l'invention décrite ci-dessus, à une température de mise en oeuvre inférieure à 190°C, de préférence inférieure à 180°C, plus préférentiellement inférieure ou égale à 160°C, selon tout procédé connu. Par exemple, des pains de la composition bitumineuse tels que décrits précédemment peuvent être chauffés dans un fondoir jusqu'à la température de mise en oeuvre.
- Application d'une première couche de ladite composition bitumineuse, d'épaisseur comprise entre 0,1 et 3 mm, de préférence entre 0,5 et 1,5mm, sur le béton de la toiture. La composition bitumineuse est appliquée à une température d'application inférieure à 190°C, de préférence inférieure à 180°C, plus préférentiellement inférieure ou égale à 160°C, selon tout procédé connu.
- Mise en place de plaques isolantes de mousse de verre expansé sur la première couche de manière à recouvrir le béton du bâtiment d'une couche uniforme isolante.
- Application d'une seconde couche de composition bitumineuse selon l'invention décrite ci-dessus, d'épaisseur comprise entre 0,1 et 3 mm, de préférence entre 0,5 et 1,5 mm, sur la couche de plaques isolantes. La composition bitumineuse est appliquée à une température d'application inférieure à 190°C, de préférence inférieure à 180°C, plus préférentiellement inférieure ou égale à 160°C, selon tout procédé connu.
- Application d'une membrane d'étanchéité sur la seconde couche.

Les première et seconde couches de la composition bitumineuse sont appliquées selon tout procédé connu, par exemple à l'aide d'un arrosoir, d'un couteau plat ou à l'aide d'un pinceau.

Les températures de mise en oeuvre et d'application sont avantageusement supérieures à 100°C, de préférence supérieures à 130°C.

La composition bitumineuse selon l'invention est particulièrement efficace en tant que liant de collage et peut être utilisée à des températures plus basses que celles de l'art antérieur. Cette caractéristique est particulièrement remarquable car elle permet de minimiser la consommation d'énergie et la durée du procédé de collage. En outre, la composition bitumineuse selon l'invention présente des propriétés mécaniques améliorées permettant un conditionnement adapté à son transport et à son stockage.

### EXEMPLES

L'invention est illustrée par les exemples suivants donnés à titre non limitatif. Les caractéristiques rhéologiques et mécaniques des bitumes ou des compositions bitumineuses auxquelles on fait référence dans ces exemples sont mesurées de la façon indiquée dans le tableau 1.

**Tableau 1**

| **Propriété** | **Abréviation** | **Unité** | **Norme de mesure** |
|---|---|---|---|
| Pénétrabilité à l'aiguille à 25°C | P₂₅ | 1/10mm | NF EN 1426 |
| Température de ramollissement bille et anneau | TBA | °C | NF EN 1427 |
| Viscosité Brookfield* | - | MPa.s | NF EN 13302 |

### Bitumes oxydés

Trois différents bitumes oxydés notés **Bₒₓ₁, Bₒₓ₂** et **Bₒₓ₃** ont utilisés :
- Bitume oxydé **Bₒₓ₁** de grade 110/30, correspondant à un bitume de TBA **113**°C et de P25 de **25** 1/10mm.
- Bitume oxydé **Bₒₓ₂** de grade 85/25, correspondant à un bitume de TBA **85**°C et de P25 de **28** 1/10mm.
- Bitume oxydé **Bₒₓ₃** de grade 100/40, correspondant à un bitume de TBA **100**°C et de P25 de **40** 1/10mm.

### Compositions bitumineuses

Trois compositions bitumineuses sont utilisées :
- Composition **C₁** renfermant une base bitume de grade 70/100 dont les caractéristiques répondent à la norme NF EN 12591 et 1,4% en masse d'acide sébacique. La composition **C₁** est préparée en chauffant la base bitume à 160°C durant 1 h à 1h30 puis en introduisant l'acide sébacique sous forme de granulés et en maintenant à une température de 160°C pendant environ 30 min.
- Composition **C₂** renfermant une base bitume de grade 70/100, 4 % en masse d'un adjuvant polymère et 1% en masse d'acide sébacique.

L'adjuvant polymère est un terpolymère éthylène/acrylate de butyle/méthacrylate de glycidyle dans des proportions massiques, respectivement de 70/21/9 et possédant un indice de fusion MFR (acronyme anglais pour « Melt Flow Rate ») (190°C/2,16 kg) de 8g/10min, calculé selon la norme ASTM D1238- ISO1133.

La composition **C₂** est préparée en chauffant la base bitume 70/100 à 160°C puis en ajoutant l'adjuvant polymère et en chauffant à 160°C pendant environ deux heures, puis en ajoutant l'acide sébacique sous forme de granulés et en maintenant à une température de 160°C pendant environ 30 min.

La Composition **C₃** est une composition bitumineuse comprenant un polymère polystyrène-b-poly(éthylène-butylène)-b-polystyrène (SEBS) spécialement conçu pour le collage à chaud d'isolants thermiques ou de membranes d'étanchéité et commercialisée par la société SOPREMA sous le nom « EAC NEO ».

### Propriétés des compositions bitume/polymère

Les caractéristiques des bitumes oxydés **Bₒₓ₁, Bₒₓ₂** et **Bₒₓ₃** et compositions bitumineuses **C₁, C₂** et **C₃** mesurées selon les normes citées ci-dessus sont consignées dans le tableau 2 suivant :

**Tableau 2**

| Liant de collage | **Bₒₓ₁** | **Bₒₓ₂** | **Bₒₓ₃** | **C₁** | **C₂** | **C₃** |
|---|---|---|---|---|---|---|
| P25 (1/10mm) | 25 | 28 | 40 | 29 | 38 | 42 |
| TBA (°C) | 113 | 85 | 100 | 115 | 77 | 76,5 |
| Viscosité Brookfield à 150 °C (mPa.s) | 7480 | 1058 | 2246 | 170 | 621 | 776 |

Les compositions **C₁** et **C₂** selon la présente invention présentent des viscosités à 150°C inférieures à celles des bitumes oxydés **Bₒₓ₁, Bₒₓ₂** et **Bₒₓ₃** et de la composition **C₃** de Soprema. Ainsi, comparativement aux liants de collage de l'art antérieur, les compositions selon l'invention sont suffisamment maniables à basse température pour être appliquées à des températures de l'ordre de 160°C, diminuant ainsi la consommation en énergie et la durée d'application du liant de collage et donc du procédé de revêtement.

On constate, en outre, que la composition **C₁** présente une TBA et une pénétrabilité P25 équivalentes à celles de la base oxydée **Bₒₓ₁.**

On constate, également, que la composition **C₂** présente une TBA et une pénétrabilité P25 équivalentes à celles de la base oxydée **Bₒₓ₂.**

Les valeurs du couple TBA et pénétrabilité P25 permettent d'évaluer la consistance des bitumes et des compositions bitumineuses ainsi que leur résistance à la déformation. Ainsi, plus la TBA est élevée et la pénétrabilité basse, plus la composition bitumineuse présente une bonne consistance et une résistance à la déformation élevée.

Les compositions bitumineuses selon la présente invention ont une consistance équivalente aux bitumes oxydés de l'art antérieur tout en permettant une application à plus basse température que celle des bitumes oxydés.

### Essais de fluage

L'essai de fluage est réalisé comme suit. Une masse de 0,5 kg de chaque échantillon de liant de collage est coulé à chaud dans un moule ferraille puis démoulé à froid. Les pains ainsi obtenus sont placés dans des étuves à différentes températures et sous une charge de 2,5 kg (+/- 50 g) pour simuler l'empilement des pains les uns sur les autres, lors de leur transport. En effet, 6 pains sont généralement empilés verticalement sur une palette lors du transport des pains de bitume. Les blocs sont d'abord placés en étuve à une température de 40°C. Si aucun fluage n'est observé après un certain temps, au maximum après 15 jours, de nouveaux pains sont moulés et placés à une température d'étuve supérieure. Cette opération est répétée jusqu'à ce qu'un fluage important des pains est observé. Le fluage se traduit par une déformation des pains et un écoulement de la composition bitumineuse. Les pains ainsi déformés sont alors inutilisables comme liant de collage. L'évaluation du fluage est effectuée de manière qualitative de façon visuelle.

Le tableau 3 ci-dessous répertorie les résultats de test de fluage obtenus pour les différents échantillons.

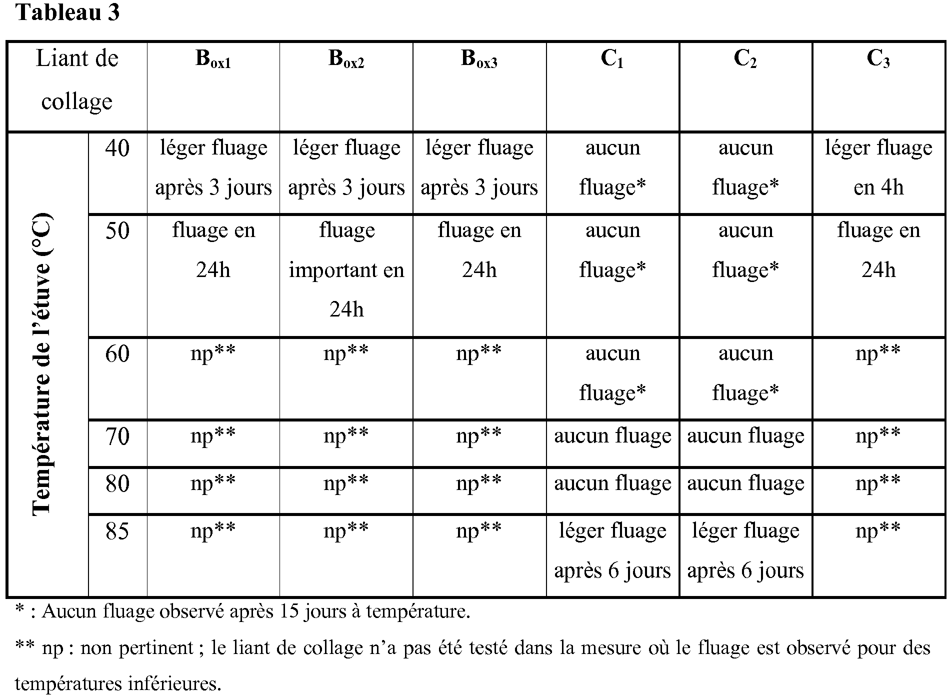

Seules les compositions bitumineuses **C₁** et **C₂** selon la présente invention, conditionnées sous forme de pains, ne fluent pas dans les conditions de stockage et de transport conventionnelles.

### Essai de pelage

Le principe de l'essai consiste à exercer une traction sur un échantillon constitué par deux bandes de membrane d'étanchéité identiques collées entre elles par le liant de collage à tester. Chaque bande a une longueur initiale de 15 cm. L'assemblage des deux bandes se fait par coulage à 160°C d'une couche de 1 à 2 mm d'épaisseur du liant de collage sur une face de l'une des bandes de membrane. Puis les deux bandes sont associées et maintenues ainsi jointes jusqu'à refroidissement du liant de collage pour former l'échantillon à tester.

Seule une extrémité des deux bandes de l'échantillon n'est pas collée sur une longueur d'environ 4 cm. Après retour à température ambiante de l'échantillon, l'essai de pelage est réalisé à l'aide d'une machine de traction commercialisée par la société Zwick et équipée d'une enceinte thermique permettant de réaliser l'essai à 23°C. Chaque partie non collée de l'extrémité de l'échantillon est maintenue par un mors de la machine de traction. La distance initiale entre les deux mors est de 50 mm. L'angle de traction entre les deux membranes de l'échantillon, initialement à 90° va s'ouvrir progressivement au fur et à mesure de la traction qui s'effectue à une vitesse de 100 mm/min. Sous la contrainte, les membranes de l'échantillon s'allongent jusqu'à ce que le liant de collage cède et que les membranes se décollent ou jusqu'à ce qu'au moins une des membranes rompe.

La machine de traction mesure la contrainte moyenne appliquée à l'échantillon (τ_{moyenne}), la distance maximale d'écartement des deux mors avant décollement des deux membranes en pourcentage par rapport à la distance initiale entre les deux mors (Dₘₐₓ), et l'énergie fournie pour atteindre cette distance maximale d'écartement (Eₘₐₓ). Les résultats sont répertoriés dans le tableau 4 ci-dessous.

**Tableau 4**

| Liant de collage | **B_{ox2*}** | **B_{ox3*}** | **C₁** | **C₂** | **C₃**^{*} |
|---|---|---|---|---|---|
| τₘₐₓ (MPa) | 0,9 | 0,35 | 1,3 | 1,2 | 0,6 |
| Dₘₐₓ (%) | 150 | 120 | 300 | 350 | 350 |
| Eₘₐₓ (J) | 2,5 | 1,1 | 8,7 | 6,9 | 3,5 |

| | | | | | |
|---|---|---|---|---|---|
| ** La mise en oeuvre à nécessiter une température de 190°C au lieu de 160°C* | | | | | |

Les compositions bitumineuses **C₁** et **C₂** selon la présente invention sont particulièrement efficaces en tant que liant de collage comparativement aux bitumes oxydés. En témoignent les résultats du test de pelage où on remarque que la contrainte maximale τₘₐₓ, la distance Dₘₐₓ et l'énergie Eₘₐₓ sont nettement plus élevées que celles des liants de collage **Bₒₓ₂** et **Bₒₓ₃.**

Comparativement à la composition bitumineuse **C₃** comprenant un polymère polystyrène-b-poly(éthylène-butylène)-b-polystyrène (SEBS), les compositions bitumineuses **C₁** et **C₂** donnent des valeurs de contrainte maximale τₘₐₓ et d'énergie Eₘₐₓ nettement plus élevées, pour une valeur de Dₘₐₓ équivalente.

Les compositions bitumineuses selon la présente invention sont particulièrement remarquables en ce qu'elles sont plus efficaces en tant que liant de collage que les liants de collage de l'art antérieur, notamment comparativement aux bitumes oxydés et aux bitumes modifiés avec des élastomères. Elles sont également faciles à mettre en oeuvre. Elles présentent une très bonne fluidité à une température de 150°C, ce qui permet de les utiliser comme liant de collage à une température d'application inférieure à 190°C, de préférence inférieure à 180°C, plus préférentiellement inférieure ou égale à 160°C. En revanche, pour obtenir une fluidité suffisante pour permettre son utilisation comme liant de collage, la température d'application préconisée des bitumes oxydés est, généralement, d'environ 220°C à 250°C. A cette température, l'énergie consommée est importante et le temps de chauffage est long. La température d'application du liant de collage **C₃** préconisée est de 190°C à 200°C. A cette température, les problèmes de consommation d'énergie et de durée de chauffage restent encore problématiques.

## Revendications

1. Utilisation d'une composition bitumineuse pour coller des revêtements sur des structures **caractérisée en ce que** ladite composition comprend au moins un additif acide de formule générale (**I**) : R-(COOH)z dans laquelle R est une chaîne hydrocarbonée linéaire ou ramifiée, saturée ou insaturée comprenant de 4 à 68 atomes de carbone, de préférence de 4 à 54 atomes de carbone, plus préférentiellement de 4 à 36 atomes de carbone et z un entier variant de 2 à 4.

2. Utilisation selon la revendication 1, **caractérisée en ce que** l'additif acide est un diacide de formule générale HOOC-C_{w}H_{2w}-COOH dans laquelle w est un entier variant de 4 à 22, de préférence de 4 à 12.

3. Utilisation selon l'une des revendications 1 et 2, **caractérisée en ce que** l'additif acide est un diacide choisi parmi le groupement constitué par l'acide adipique, l'acide pimélique, l'acide subérique, l'acide azélaique, l'acide sébacique, l'acide undécanedioïque, l'acide 1,2-dodécanedioïque et l'acide tétradécanedioïque.

4. Utilisation selon l'une quelconque des revendications 1 à 3, **caractérisée en ce que** ladite composition comprend de 0,1% à 5% en masse, de préférence de 0,5 à 4% en masse, plus préférentiellement de 0,5 à 2,5% en masse dudit additif acide par rapport à la masse totale de ladite composition.

5. Utilisation selon l'une quelconque des revendications 1 à 4, **caractérisée en ce que** ladite composition comprend au moins un adjuvant polymère oléfinique fonctionnalisé par au moins des groupements fonctionnels glycidyle.

6. Utilisation selon la revendication 5, **caractérisée en ce que** l'adjuvant polymère oléfinique est choisi dans le groupe consistant en :
(a) les copolymères, statistiques ou séquencés, d'éthylène et d'un monomère choisi parmi l'acrylate de glycidyle et le méthacrylate de glycidyle, comprenant de 50% à 99,7% en masse d'éthylène;
(b) les terpolymères, statistiques ou séquencés, d'éthylène, d'un monomère A choisi parmi l'acétate de vinyle et les acrylates ou méthacrylates d'alkyle en C₁ à C₆ et d'un monomère B choisi parmi l'acrylate de glycidyle et le méthacrylate de glycidyle, comprenant de 0,5% à 40% en masse de motifs issus du monomère A et, de 0,5% à 15% en masse de motifs issus du monomère B, le reste étant formé de motifs issus de l'éthylène ; et
(c) les copolymères résultant du greffage d'un monomère B choisi parmi l'acrylate de glycidyle et le méthacrylate de glycidyle, sur un substrat consistant en un polymère choisi parmi les polyéthylènes, les polypropylènes, les copolymères statistiques ou séquencés d'éthylène et d'acétate de vinyle et les copolymère statistiques ou séquencés d'éthylène et d'acrylate ou méthacrylate d'alkyle en C₁ à C₆, comprenant de 40% à 99,7% en masse d'éthylène, lesdits copolymères greffés comprenant de 0,5% à 15% en masse de motifs greffés issus du monomère B.

7. Utilisation selon la revendication 6, **caractérisée en ce que** l'adjuvant polymère oléfinique est choisi parmi les terpolymères statistiques ou séquencés d'éthylène, d'un monomère A choisi parmi l'acétate de vinyle et les acrylates ou méthacrylates d'alkyle en C₁ à C₆ et d'un monomère B choisi parmi l'acrylate de glycidyle et le méthacrylate de glycidyle, comprenant de 0,5% à 40% en masse de motifs issus du monomère A et, de 0,5% à 15% en masse de motifs issus du monomère B, le reste étant formé de motifs issus de l'éthylène.

8. Utilisation selon la revendication 6, **caractérisée en ce que** l'adjuvant polymère oléfinique est choisi parmi les terpolymères statistiques d'éthylène, d'un monomère A choisi parmi les acrylates ou méthacrylates d'alkyle en C₁ à C₆ et d'un monomère B choisi parmi l'acrylate de glycidyle et le méthacrylate de glycidyle, comprenant de 0,5% à 40% en masse de motifs issus du monomère A et, de 0,5% à 15% en masse de motifs issus du monomère B, le reste étant formé de motifs issus de l'éthylène.

9. Utilisation selon l'une quelconque des revendications 5 à 8, **caractérisée en ce que** ladite composition comprend de 0,05% à 15% en masse, de préférence de 0,1 à 10% en masse, plus préférentiellement de 0,5 à 6% en masse de l'adjuvant polymère oléfinique par rapport à la masse totale de ladite composition.

10. Utilisation selon l'une quelconque des revendications 1 à 9, **caractérisée en ce que** ladite composition est conditionnée sous forme de pains de bitume ou dans des sacs en matériau thermofusible ou dans des seaux en matériau thermofusible.

11. Utilisation selon l'une quelconque des revendications 1 à 10, **caractérisée en ce que** la composition bitumineuse est mise en oeuvre et appliquée pour le collage à des températures de mise en oeuvre et d'application supérieures à 100°C, de préférence supérieures à 130°C.

12. Utilisation selon l'une quelconque des revendications 1 à 11, **caractérisée en ce que** la composition bitumineuse est mise en oeuvre et/ou appliquée pour le collage à une température inférieure à 190°C, de préférence inférieure à 180°C, plus préférentiellement inférieure ou égale à 160°C.

13. Utilisation selon l'une quelconque des revendications 1 à 12, comme liant de collage de revêtements d'ouvrages de travaux publics, de génie civil ou de bâtiments, de préférence, de revêtements sols et/ou murs, plus préférentiellement, de revêtements ou membranes d'étanchéité et/ou d'isolation, de panneaux ignifugés, des panneaux isolants thermiques et/ou phoniques et des plaques isolantes de mousses de verre expansé.

14. Utilisation selon la revendication 13, comme liant de collage à chaud de revêtements d'ouvrages de travaux publics, de génie civil ou de bâtiments.

15. Liant de collage de revêtements d'ouvrages de travaux publics, de génie civil ou de bâtiments **caractérisé en ce qu'**il est constitué d'une composition bitumineuse comprenant au moins un additif acide de formule générale (**I**) : R-(COOH)z dans laquelle R est une chaîne hydrocarbonée linéaire ou ramifiée, saturée ou insaturée comprenant de 4 à 68 atomes de carbone et z un entier variant de 2 à 4 et au moins un adjuvant polymère oléfinique fonctionnalisé par au moins des groupements fonctionnels glycidyle .

## Patentansprüche

1. Verwendung einer bituminösen Zusammensetzung zum Kleben von Beschichtungen auf Strukturen,
**dadurch gekennzeichnet, dass** die Zusammensetzung mindestens ein saures Additiv mit der allgemeinen Formel (I): R-(COOH)z umfasst, wobei R eine lineare oder verzweigte, gesättigte oder ungesättigte Kohlenwasserstoffkette mit 4 bis 68 Kohlenstoffatomen, vorzugsweise 4 bis 54 Kohlenstoffatomen, bevorzugter 4 bis 36 Kohlenstoffatomen, ist, und z eine ganze Zahl ist, die von 2 bis 4 variiert.

2. Verwendung nach Anspruch 1,
**dadurch gekennzeichnet, dass** das saure Additiv eine Disäure mit der allgemeinen Formel HOOC-C_{w}H_{2w}-COOH ist, wobei w eine ganze Zahl ist, die von 4 bis 22, vorzugsweise von 4 bis 12, variiert.

3. Verwendung nach einem der Ansprüche 1 und 2,
**dadurch gekennzeichnet, dass** das saure Additiv eine Disäure ist, ausgewählt aus der Gruppe bestehend aus Adipinsäure, Pimelinsäure, Suberinsäure, Azelainsäure, Sebacinsäure, Undecandionsäure, 1,2-Dodecandionsäure und Tetradecandionsäure.

4. Verwendung nach einem der Ansprüche 1 bis 3,
**dadurch gekennzeichnet, dass** die Zusammensetzung von 0,1 Masse-% bis 5 Masse-%, vorzugsweise von 0,5 bis 4 Masse-%, bevorzugter von 0,5 bis 2,5 Masse-%, des sauren Additivs in Bezug auf die Gesamtmasse der Zusammensetzung umfasst.

5. Verwendung nach einem der Ansprüche 1 bis 4,
**dadurch gekennzeichnet, dass** die Zusammensetzung mindestens ein Olefinpolymer-Adjuvans umfasst, das mindestens durch funktionelle Glycidylgruppen funktionalisiert ist.

6. Verwendung nach Anspruch 5,
**dadurch gekennzeichnet, dass** das Olefinpolymer-Adjuvans ausgewählt ist aus der Gruppe bestehend aus:
(a) statistischen oder sequenzierten Copolymeren von Ethylen und einem Monomer, ausgewählt aus Glycidylacrylat und Glycidylmethacrylat, umfassend 50 Masse-% bis 99,7 Masse-% Ethylen;
(b) statistischen oder sequenzierten Terpolymeren von Ethylen, einem Monomer A, ausgewählt aus Vinylacetat und C₁-C₆-Alkylacrylaten oder -methacrylaten, und einem Monomer B, ausgewählt aus Glycidylacrylat und Glycidylmethacrylat, umfassend von 0,5 Masse-% bis 40 Masse-% Einheiten, die vom Monomer A stammen, und von 0,5 Masse-% bis 15 Masse-% Einheiten, die vom Monomer B stammen, wobei der Rest aus Einheiten gebildet ist, die von Ethylen stammen; und
(c) Copolymeren, die durch Pfropfen eines Monomers B, ausgewählt aus Glycidylacrylat und Glycidylmethacrylat, auf ein Substrat erhalten werden, das aus einem Polymer besteht, ausgewählt aus Polyethylen, Polypropylenen, statistischen oder sequenzierten Copolymeren von Ethylen und Vinylacetat und statistischen oder sequenzierten Copolymeren von Ethylen und C₁-C₆-Alkylacrylat oder -methacrylat, umfassend von 40 Masse-% bis 99,7 Masse-% Ethylen, wobei die gepfropften Copolymere von 0,5 Masse-% bis 15 Masse-% gepfropfte Einheiten umfassen, die vom Monomer B stammen.

7. Verwendung nach Anspruch 6,
**dadurch gekennzeichnet, dass** das Olefinpolymer-Adjuvans ausgewählt ist aus statistischen oder sequenzierten Terpolymeren von Ethylen, einem Monomer A, ausgewählt aus Vinylacetat und C₁-C₆-Alkylacrylaten oder -methacrylaten, und einem Monomer B, ausgewählt aus Glycidylacrylat und Glycidylmethacrylat, umfassend von 0,5 Masse-% bis 40 Masse-% Einheiten, die vom Monomer A stammen, und von 0,5 Masse-% bis 15 Masse-% Einheiten, die vom Monomer B stammen, wobei der Rest aus Einheiten gebildet ist, die von Ethylen stammen.

8. Verwendung nach Anspruch 6,
**dadurch gekennzeichnet, dass** das Olefinpolymer-Adjuvans ausgewählt ist aus statistischen Terpolymeren von Ethylen, einem Monomer A, ausgewählt aus C₁-C₆-Alkylacrylaten oder -methacrylaten, und einem Monomer B, ausgewählt aus Glycidylacrylat und Glycidylmethacrylat, umfassend von 0,5 Masse-% bis 40 Masse-% Einheiten, die vom Monomer A stammen, und von 0,5 Masse-% bis 15 Masse-% Einheiten, die vom Monomer B stammen, wobei der Rest aus Einheiten gebildet ist, die von Ethylen stammen.

9. Verwendung nach einem der Ansprüche 5 bis 8,
**dadurch gekennzeichnet, dass** die Zusammensetzung von 0,05 Masse-% bis 15 Masse-%, vorzugsweise von 0,1 bis 10 Masse-%, bevorzugter von 0,5 bis 6 Masse-%, des Olefinpolymer-Adjuvans in Bezug auf die Gesamtmasse der Zusammensetzung umfasst.

10. Verwendung nach einem der Ansprüche 1 bis 9,
**dadurch gekennzeichnet, dass** die Zusammensetzung in der Form von Bitumenstampfkuchen oder in Säcken aus einem wärmeschmelzbaren Material oder in Behältern aus einem wärmeschmelzbaren Material konditioniert wird.

11. Verwendung nach einem der Ansprüche 1 bis 10,
**dadurch gekennzeichnet, dass** die bituminöse Zusammensetzung zum Kleben bei Herstellungs- und Anwendungstemperaturen von mehr als 100°C, vorzugsweise mehr als 130°C, hergestellt und angewendet wird.

12. Verwendung nach einem der Ansprüche 1 bis 11,
**dadurch gekennzeichnet, dass** die bituminöse Zusammensetzung zum Kleben bei einer Temperatur von weniger als 190°C, vorzugsweise weniger als 180°C, bevorzugter kleiner oder gleich 160°C, hergestellt und/oder angewendet wird.

13. Verwendung nach einem der Ansprüche 1 bis 12,
als Klebebindemittel für Beschichtungen bei öffentlichen Bauarbeiten, Bauwerken oder Gebäuden, vorzugsweise Boden- und/oder Mauerbeschichtungen, bevorzugter Dichtheits- und/oder Isolierbeschichtungen oder -membranen, flammhemmenden Platten, Wärmeisolier- und/oder Schalldämmungsplatten und Isolierplatten aus expandiertem Schaumglas.

14. Verwendung nach Anspruch 13,
als Heißklebebindemittel für Beschichtungen bei öffentlichen Bauarbeiten, Bauwerken oder Gebäuden.

15. Klebebindemittel für Beschichtungen bei öffentlichen Bauarbeiten, Bauwerken oder Gebäuden,
**dadurch gekennzeichnet, dass** dieses aus einer bituminösen Zusammensetzung besteht, umfassend mindestens ein saures Additiv mit der allgemeinen Formel (I): R-(COOH)z umfasst, wobei R eine lineare oder verzweigte, gesättigte oder ungesättigte Kohlenwasserstoffkette mit 4 bis 68 Kohlenstoffatomen ist, und z eine ganze Zahl ist, die von 2 bis 4 variiert, und mindestens ein Olefinpolymer-Adjuvans, das mindestens durch funktionelle Glycidylgruppen funktionalisiert ist.

## Claims

1. Use of a bituminous composition for bonding coatings to structures, **characterized in that** said composition comprises at least one acidic additive of general formula **(I):** R-(COOH)z in which R is a linear or branched, saturated or unsaturated hydrocarbon-based chain comprising from 4 to 68 carbon atoms, preferably from 4 to 54 carbon atoms, more preferentially from 4 to 36 carbon atoms and z is an integer ranging from 2 to 4.

2. Use according to Claim 1, **characterized in that** the acidic additive is a diacid of general formula HOOC-C_{w}H_{2w}-COOH in which w is an integer ranging from 4 to 22, preferably from 4 to 12.

3. Use according to either of Claims 1 and 2, **characterized in that** the acidic additive is a diacid chosen from the group formed by adipic acid, pimelic acid, suberic acid, azelaic acid, sebacic acid, undecanedioic acid, 1,2-dodecanedioic acid and tetradecanedioic acid.

4. Use according to any one of Claims 1 to 3, **characterized in that** said composition comprises from 0.1% to 5% by mass, preferably from 0.5% to 4% by mass, more preferentially from 0.5% to 2.5% by mass of said acidic additive relative to the total mass of said composition.

5. Use according to any one of Claims 1 to 4, **characterized in that** said composition comprises at least one olefinic polymer adjuvant functionalized with at least glycidyl functional groups.

6. Use according to Claim 5, **characterized in that** the olefinic polymer adjuvant is chosen from the group consisting of:
(a) statistical or block copolymers, of ethylene and of a monomer chosen from glycidyl acrylate and glycidyl methacrylate, comprising from 50% to 99.7% by mass of ethylene;
(b) statistical or block terpolymers, of ethylene, of a monomer A chosen from vinyl acetate and C₁ to C₆ alkyl acrylates or methacrylates and of a monomer B chosen from glycidyl acrylate and glycidyl methacrylate, comprising from 0.5% to 40% by mass of units derived from monomer A and from 0.5% to 15% by mass of units derived from monomer B, the remainder being formed from units derived from ethylene; and
(c) copolymers resulting from the grafting of a monomer B chosen from glycidyl acrylate and glycidyl methacrylate to a substrate consisting of a polymer chosen from polyethylenes, polypropylenes, statistical or block copolymers of ethylene and of vinyl acetate and statistical or block copolymers of ethylene and of a C₁ to C₆ alkyl acrylate or methacrylate, comprising from 40% to 99.7% by mass of ethylene, said grafted copolymers comprising from 0.5% to 15% by mass of grafted units derived from monomer B.

7. Use according to Claim 6, **characterized in that** the olefinic polymer adjuvant is chosen from statistical or block terpolymers of ethylene, of a monomer A chosen from vinyl acetate and C₁ to C₆ alkyl acrylates or methacrylates and of a monomer B chosen from glycidyl acrylate and glycidyl methacrylate, comprising from 0.5% to 40% by mass of units derived from monomer A and from 0.5% to 15% by mass of units derived from monomer B, the remainder being formed from units derived from ethylene.

8. Use according to Claim 6, **characterized in that** the olefinic polymer adjuvant is chosen from statistical terpolymers of ethylene, of a monomer A chosen from C₁ to C₆ alkyl acrylates or methacrylates and of a monomer B chosen from glycidyl acrylate and glycidyl methacrylate, comprising from 0.5% to 40% by mass of units derived from monomer A and from 0.5% to 15% by mass of units derived from monomer B, the remainder being formed from units derived from ethylene.

9. Use according to any one of Claims 5 to 8, **characterized in that** said composition comprises from 0.05% to 15% by mass, preferably from 0.1% to 10% by mass, more preferentially from 0.5% to 6% by mass of the olefinic polymer adjuvant relative to the total mass of said composition.

10. Use according to any one of Claims 1 to 9, **characterized in that** said composition is conditioned in the form of bitumen cakes or in bags made of hot-melt material or in buckets made of hot-melt material.

11. Use according to any one of Claims 1 to 10, **characterized in that** the bituminous composition is used and applied for bonding at working and application temperatures of greater than 100°C, preferably greater than 130°C.

12. Use according to any one of Claims 1 to 11, **characterized in that** the bituminous composition is used and/or applied for bonding at a temperature of less than 190°C, preferably less than 180°C, more preferentially less than or equal to 160°C.

13. Use according to any one of Claims 1 to 12, as an adhesive binder for coatings for public works, civil engineering works or construction works, preferably for floor and/or wall coatings, more preferentially for sealing and/or insulating coatings or membranes, flame-retardant panels, heat-insulating and/or sound-insulating panels and expanded glass foam insulating plates.

14. Use according to Claim 13, as a hot adhesive binder for coatings for public works, civil engineering works or construction works.

15. Adhesive binder for coatings for public works, civil engineering works or construction works, **characterized in that** it is formed from a bituminous composition comprising at least one acidic additive of general formula **(I):** R-(COOH)z in which R is a linear or branched, saturated or unsaturated hydrocarbon-based chain comprising from 4 to 68 carbon atoms and z is an integer ranging from 2 to 4, and at least one olefinic polymer adjuvant functionalized with at least glycidyl functional groups.
